# FASCICULE DE BREVET EUROPEEN

(11) **EP 0 737 827 B1**
(45) Date de publication et mention de la délivrance du brevet: **02.06.1999**
(21) Numéro de dépôt: 96400765.2
(22) Date de dépôt: 10.04.1996
(51) Int. Cl.: F16H 63/34, F16H 63/20

(54) **Commande interne de boîte de vitesses avec dispositif de rappel d'organes de sélection**
In Getriebe eingebaute Steuerung mit einer Federeinrichtung der Wählorgane
Internal control of gearbox with spring device in selection mechanism

(30) Priorité: 14.04.1995 FR 9504505
(43) Date de publication de la demande: 16.10.1996
(73) Titulaire: AUTOMOBILES PEUGEOT, 75116 Paris (FR); AUTOMOBILES CITROEN, 92200 Neuilly-sur-Seine (FR)
(72) Inventeur: Ploe, Pierre, 25200 Montbeliard (FR)
(74) Mandataire: Gendraud, Pierre

(56) Documents cités:
- EP-A- 0 293 288
- EP-A- 0 360 410
- FR-A- 2 248 549
- US-A- 3 367 205
- US-A- 4 608 877

## Description

L'invention est relative à une commande interne de boîte de vitesses avec dispositif de rappel d'organes de sélection.

Elle concerne plus précisément les commandes de vitesses dans lesquelles, pour actionner alternativement plusieurs éléments juxtaposés d'engagement de rapports, un axe de commande porte au moins un doigt transversal et une pièce dite clé d'interverrouillage, le doigt étant fixé à l'axe et propre à être d'abord engagé sélectivement, par coulissement de l'axe, dans l'une de plusieurs encoches agencées chacune dans l'un desdits éléments, puis à entraîner l'élément ainsi sélectionné, par rotation de l'axe, de manière à réaliser l'engagement -ou passage- d'un rapport, tandis que la clé d'interverrouillage, solidaire axialement de l'axe et immobile en rotation, est propre à être engagée, par coulissement de l'axe, dans les autres encoches que celle de l'élément sélectionné, de manière à immobiliser les autres éléments d'engagement.

Pour que la clé soit immobile en rotation, donc se déplace uniquement en translation axiale, elle est montée libre en rotation sur l'axe et comporte généralement une partie éloignée de l'axe coopérant avec un moyen de guidage fixe c'est-à-dire solidaire du carter de la boîte de vitesses.

Par ailleurs, ces commandes comprennent un moyen de rappel en position médiane de l'axe dans son coulissement pour la sélection des rapports, moyen constitué en général de deux ressorts hélicoïdaux entourant l'axe, disposés coaxialement respectivement de part et d'autre de l'ensemble formé par le doigt et la clé, et prenant appui chacun sur l'une de deux parois opposées du carter. Il en résulte un encombrement relativement important dans la direction axiale du coulissement.

Un tel dispositif de commande d'une boîte de vitesses, avec toutes les caractéristiques du préambule de la revendication 1, est généralement connu.

L'invention vise à pallier cet inconvénient en proposant un dispositif de commande du type susmentionné qui soit simple et compact. A cet effet, selon l'invention, les deux ressorts sont disposés non plus sur l'axe de commande mais sur une tige qui est parallèle et qui constitue un moyen de guidage immobilisant en rotation la clé d'interverrouillage, une extension radiale fourchue de celle-ci chevauchant la tige en étant apte à coulisser sur elle entre les deux ressorts.

Selon quelques caractéristiques avantageuses de l'invention :
- la tige et l'axe sont portés chacun par deux paliers respectivement délimités par deux parois parallèles du carter qui servent chacune d'appui axial à l'un des deux ressorts.
- la tige est montée coulissante dans ses paliers et poussée axialement dans un sens par l'un des deux ressorts comprimé entre la paroi associée et un anneau d'arrêt central solidaire de la tige ainsi qu'un anneau d'extrémité propre à buter axialement sur l'autre paroi, tandis que l'autre ressort est comprimé entre cet anneau d'extrémité et l'extension radiale qu'il pousse vers l'anneau central.
- les anneaux sont disposés sur la tige de façon qu'en position médiane de l'axe l'extension de la clé est adjacente à l'anneau central tandis que l'anneau d'extrémité bute contre la paroi qui lui est associée.
- la dimension axiale de la clé et l'écartement des parois sont tels qu'en positions axiales de l'axe correspondant à la sélection de rapports extrêmes, la clé est adjacente à l'une ou l'autre des deux parois.
- une coupelle apte à coulisser sur la tige est interposée axialement entre chaque extrémité des ressorts et la pièce adjacente.

Un mode de réalisation du dispositif selon l'invention est décrit ci-après, avec référence aux dessins annexés parmi lesquels:
- la figure 1 est une vue partielle simplifiée en coupe axiale d'une commande interne de boîte de vitesses en position médiane de sélection de rapports.
- les figures 2 et 3 sont des vues analogues à la précédente, dans deux autres positions de sélection de rapports.

On voit sur les figures un axe de commande 1 propre à coulisser dans deux paliers 2 et 3 délimités respectivement par des parois parallèles 4 et 5 d'un carter d'une boîte de vitesses.

De façon usuelle, deux doigts 6 et 7 solidaires d'un même moyeu 8 fixé à l'axe par une goupille 9 s'étendent radialement de sorte que leur extrémité soit située au niveau d'encoches 10 pratiquées dans chacun de plusieurs éléments 11, 12 et 13 mobiles orthogonalement à l'axe 1.

Ces éléments, appelés noix, sont solidaires de tiges coulissantes ou de leviers pivotants reliés à des fourchettes propres à déplacer des pignons ou des crabots pour réaliser l'engagement ou le dégagement des divers rapports de la boîte de vitesses.

Les noix 11, 12 et 13 permettent ainsi respectivement de passer les rapports de 1ère ou 2ème, 3ème ou 4ème, 5ème ou marche arrière selon qu'elles sont déplacées dans un sens ou dans l'autre, perpendiculairement au plan des figures.

L'axe de commande 1 porte aussi une clé d'interverrouillage 14 munie de trois bras radiaux 15, 16 et 17 dont l'extrémité libre est située au niveau des encoches 10. Cette clé 14 est rendue axialement solidaire de l'axe 1 par chevauchement du moyeu 8 mais est libre en rotation par rapport à cet axe.

Les extrémités respectives des doigts 6 et 7 et des bras 15, 16 et 17 sont disposées, par rapport aux noix 11, 12 et 13, de façon connue telle que, par coulissement axial de l'axe 1, l'un des doigts 6 ou 7 est propre à être d'abord sélectivement engagé dans l'une des encoches 10 puis à entraîner la noix ainsi sélectionnée, par rotation de l'axe 1, de manière à réaliser le passage de l'un des deux rapports correspondants, tandis que la clé d'interverrouillage 14 immobilise les autres noix par engagement d'au moins un de ses bras 15, 16 et 17 dans les encoches de ces noix.

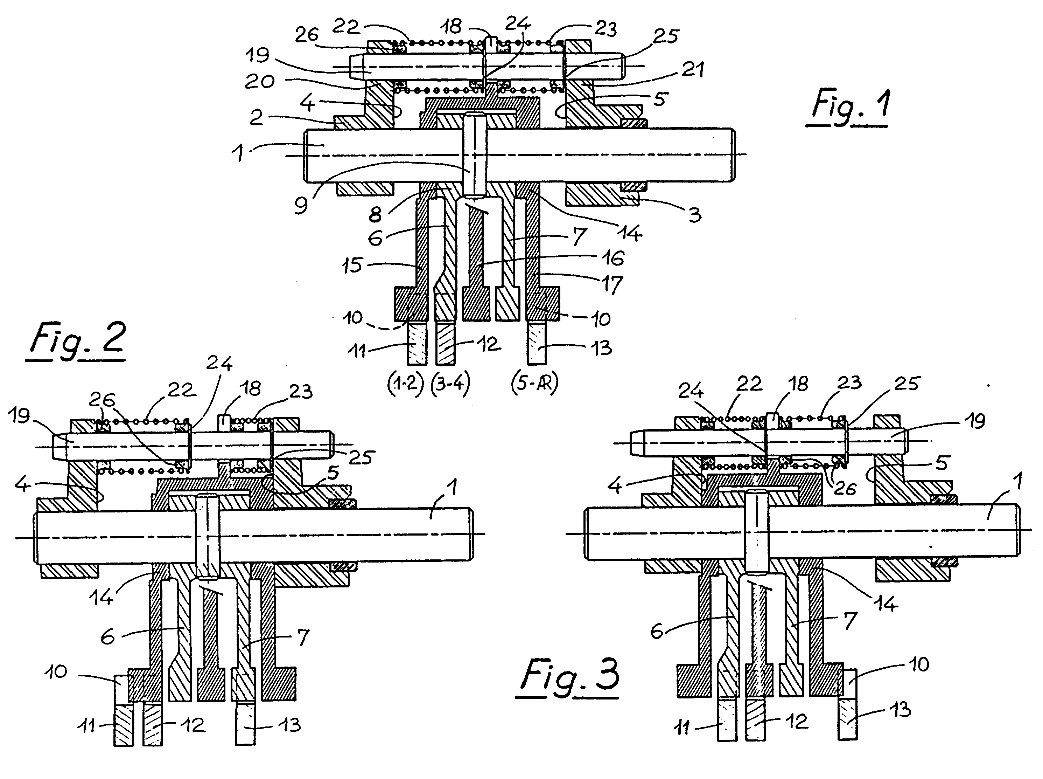

Ainsi, en position axiale médiane de l'axe (figure 1), c'est la noix 12 qui est sélectionnée par le doigt 6, permettant l'engagement du 3ème ou du 4ème rapport, et dans les positions extrêmes de coulissement de l'axe, ce sont alternativement les noix 11 et 13 qui sont sélectionnées, respectivement par les doigts 6 et 7, pour l'engagement alternatif des 1er et 2ème rapports (figure 3) ou du 5ème rapport et de la marche arrière (figure 2).

Selon l'invention, la clé 14 comporte une extension radiale 18 dont l'extrémité libre est fourchue et propre à coulisser sur une tige 19 parallèle à l'axe 1 et montée coulissante dans deux paliers 20 et 21 respectivement délimités par les parois 4 et 5.
De plus, l'extension 18 est interposée entre deux ressorts 22 et 23 entourant la tige et assurant le rappel de la clé, donc de l'axe 1 et des doigts 6 et 7, en position médiane de sélection.

Le ressort 22 est comprimé entre la paroi 4 et un anneau d'arrêt central 24 maintenu dans une gorge de la tige 19 ainsi qu'un anneau d'arrêt d'extrémité 25 propre à buter contre l'autre paroi 5, tandis que l'autre ressort 23 est comprimé entre cet anneau 25 et l'extension 18 disposée entre ce ressort et l'autre anneau 24. Des coupelles 26 aptes à coulisser sur la tige 19 sont interposées respectivement axialement entre les extrémités des ressorts 22 et 23 et les anneaux 24 et 25 ou autres pièces adjacentes 4 et 18.

Ces deux anneaux sont disposés sur la tige de façon qu'en position médiane de l'axe 1 (figure 1) l'extension 18 est adjacente à l'anneau central 24 tandis que l'anneau d'extrémité 25 bute sur la paroi 5 sous l'action du ressort 22 poussant la tige par l'anneau central 24.

Ainsi quand l'axe 1 est déplacé vers la paroi 5 de manière à sélectionner le rapport de 5ème ou de marche arrière (figure 2), la tige 19 restant immobile par appui de l'anneau 25 contre cette paroi, l'extension 18 s'écarte de l'anneau 24 et comprime le ressort 23 qui assure alors seul le rappel en position médiane ; et quand l'axe 1 est déplacé vers la paroi 4 de manière à sélectionner le 1er ou le 2ème rapport (figure 3), l'extension 18 déplace la tige 19 vers cette paroi, l'anneau 25 s'écartant donc de l'autre paroi 5, en comprimant le ressort 22 qui assure alors seul le rappel en position médiane.

La limitation de course de l'axe 1 dans un sens ou dans l'autre est obtenue par un dimensionnement approprié de la clé 14 en direction axiale et de l'écartement des parois 4 et 5, de manière que la clé 14 bute sur l'une ou l'autre de ces parois lors de la sélection des rapports extrêmes (figure 2 et figure 3).

Le dispositif ainsi réalisé s'avère particulièrement compact, notamment en direction axiale grâce au report des deux ressorts de rappel hors de l'axe de commande, et peu coûteux en particulier grâce au fait que la tige remplit deux fonctions, celle de guidage de la clé et celle de support des deux ressorts de rappel.

## Revendications

1. Dispositif de commande d'une boîte de vitesses dans le carter de laquelle, pour actionner alternativement plusieurs éléments juxtaposés (11,12,13) d'engagement de rapports, un axe de commande (1) porte au moins un doigt transversal (6,7) et une pièce dite clé d'interverrouillage (14), le doigt étant fixé à l'axe et propre à être d'abord engagé sélectivement, par coulissement de l'axe, dans l'une de plusieurs encoches (10) agencées chacune dans l'un desdits éléments, puis à entraîner l'élément ainsi sélectionné, par rotation de l'axe, de manière à réaliser l'engagement d'un rapport, tandis que la clé d'interverrouillage, solidaire axialement de l'axe et immobile en rotation, est propre à être engagée, par coulissement de l'axe, dans les autres encoches que celle de l'élément sélectionné, de manière à immobiliser les autres éléments d'engagement, le dispositif comprenant par ailleurs, pour rappeler l'axe (1) en position médiane de sélection des rapports, deux ressorts hélicoïdaux agissant coaxialement respectivement de part et d'autre de la clé (14),
caractérisé en ce que les deux ressorts (22,23) sont disposés sur une tige (19) qui est parallèle à l'axe de commande (1) et qui constitue un moyen de guidage immobilisant en rotation la clé d'interverrouillage (14), une extension radiale fourchue (18) de celle-ci chevauchant la tige en étant apte à coulisser sur elle entre les deux ressorts.

2. Dispositif selon la revendication 1,
caractérisé en ce que la tige (19) et l'axe (1) sont portés chacun par deux paliers respectivement délimités par deux parois parallèles (4,5) du carter qui servent chacune d'appui axial à l'un des deux ressorts(22,23).

3. Dispositif selon la revendication 2,
caractérisé en ce que la tige (19) est montée coulissante dans ses paliers (20,21) et poussée axialement dans un sens par l'un des deux ressorts (22) comprimé entre la paroi associée (4) et un anneau d'arrêt central (24) solidaire de la tige ainsi qu'un anneau d'extrémité (25) propre à buter axialement sur l'autre paroi (5), tandis que l'autre ressort (23) est comprimé entre cet anneau d'extrémité et l'extension radiale (18) qu'il pousse vers l'anneau central.

4. Dispositif selon la revendication 3,
caractérisé en ce que les anneaux (24,25) sont disposés sur la tige (19) de façon qu'en position médiane de l'axe (1) l'extension (18) de la clé est adjacente à l'anneau central (24) tandis que l'anneau d'extrémité (25) bute contre la paroi (5) qui lui est associée.

5. Dispositif selon l'une quelconque des revendications 2 à 4,
caractérisé en ce que la dimension axiale de la clé (14) et l'écartement des parois (4,5) sont tels qu'en positions axiales de l'axe (1) correspondant à la sélection de rapports extrêmes, la clé est adjacente à l'une ou l'autre des deux parois.

6. Dispositif selon l'une quelconque des revendications précédentes,
caractérisé en ce qu'une coupelle (26) apte à coulisser sur la tige (19) est interposée axialement entre chaque extrémité des ressorts (22,23) et la pièce adjacente (24,25,4,18).

## Patentansprüche

1. Vorrichtung zum Steuern eines Getriebes in dessen Gehäuse, zum abwechselnden Betätigen mehrerer benachbarter Elemente (11, 12, 13) des Getriebeeingriffe, wobei eine Steuerachse oder -welle (1) wenigstens einen Querfinger (6, 7) und ein Teil genannt Zwischenverriegelungsschlüssel (14) trägt, wobei der Finger an der Achse befestigt ist und in der Lage ist, zunächst wahlweise durch Gleiten der Achse in eine von mehreren Kerben (10) einzugreifen, die jeweils in einem der Elemente ausgebildet sind, sodann das so ausgewählte Element mitzunehmen, durch Drehung der Welle, derart, daß der Eingriff einer Getriebestufe erzeugt wird, während der Zwischenverriegelungsschlüssel, der axial mit der Welle verbunden ist und drehunbeweglich ist, in der Lage ist, durch Gleiten der Welle in die anderen Kerben wie jene des ausgewählten Elements einzugreifen, derart, daß die anderen Eingriffselemente unbeweglich werden, wobei die Vorrichtung darüber hinaus, zum Beaufschlagen der Welle (1) in die Mittelposition der Getriebeauswahl, zwei Schraubenfedern aufweist, die koaxial beiderseits des Schlüssels (14) einwirken,
dadurch gekennzeichnet, daß
die beiden Federn (22, 23) auf einer Stange (19) angeordnet sind, die parallel zur Steuerwelle (1) ist, und die eine Führungseinrichtung bildet, die den Zwischenverriegelungsschlüssel (14) drehunbeweglich macht, wobei ein gegabelter radialer Vorsprung (18) von diesem die Stange hinter- bzw. umgreift, wobei er in der Lage ist, auf dieser zwischen den beiden Federn zu gleiten.

2. Vorrichtung nach Anspruch 1, dadurch gekennzeichnet, daß die Stange (19) und die Welle (1) jeweils durch zwei Lager gelagert sind, die durch zwei parallele Seitenwände (4, 5) des Gehäuses entsprechend begrenzt sind, die jeweils als axialer Anschlag der einen der beiden Federn (22, 23) dienen.

3. Vorrichtung nach Anspruch 2, dadurch gekennzeichnet, daß die Stange (19) gleitbeweglich in ihren Lagern (29, 21) gelagert ist und axial in eine Richtung durch die eine der beiden Federn (22) gedrückt wird, die zwischen der zugehörigen Seitenwand (4) und einem zentralen Haltering (24), der mit der Stange verbunden ist, sowie einem Endring (25), der in der Lage ist, axial gegen die andere Seitenwand (5) anzuschlagen, komprimiert ist, während die andere Feder (22) zwischen diesem Endring und dem radialen Vorsprung (18) komprimiert ist, der sie in Richtung des zentralen Rings drückt.

4. Vorrichtung nach Anspruch 3, dadurch gekennzeichnet, daß die Ringe (24, 25) auf der Stange (19) derart angeordnet sind, daß in Mittelposition der Welle (1) der Vorsprung (18) des Schlüssels sich in der Nähe des zentralen Rings (24) befindet, während der Endring (25) gegen die Seitenwand (5), die ihm zugeordnet ist, anschlägt.

5. Vorrichtung nach einem der Ansprüche 2 bis 4, dadurch gekennzeichnet, daß die axiale Abmessung des Schlüssels (4) und die Beabstandung der Seitenwände (4, 5) derart sind, daß in den axialen Positionen der Welle (1), die der Auswahl der extremen Getriebestufen entspricht, der Schlüssel sich in der Nähe der einen oder der anderen der beiden Seitenwände befindet.

6. Vorrichtung nach einem der vorhergehenden Ansprüche, dadurch gekennzeichnet, daß eine Kappe (26), die in der Lage ist, auf der Stange (19) zu gleiten, axial zwischen einem jeden Ende der Federn (22, 23) und dem zugehörigen Teil (24, 25, 4, 18) gesetzt ist.

## Claims

1. Control device for a gear box, inside the housing of which, in order to actuate alternately several juxtaposed gear-engagement members (11, 12, 13), a control shaft (1) carries at least one transverse arm (6, 7) and a part known as an interlocking key (14), the arm being fixed to the shaft and suitable for being first engaged selectively, by sliding of the shaft, in one of several notches (10) each arranged in one of said members, then driving the member selected in this way, by rotation of the shaft, so as to produce the engagement of a gear, while the interlocking key, being axially integral with the shaft and immobile in rotation, is suitable for being engaged, by sliding of the shaft, in the notches other than that of the selected member, so as to immobilise the other engagement members, the device also comprising, in order to return the shaft (1) to the median gear-selection position, two helical springs acting coaxially respectively on either side of the key (14),
characterised in that the two springs (22, 23) are arranged on a rod (19) that is parallel to the control shaft (1) and that constitutes a guide means immobilising the interlocking key (14) in rotation, a forked radial extension (18) thereof straddling the rod while being capable of sliding over it between the two springs.

2. Device according to Claim 1,
characterised in that the rod (19) and the shaft (1) are each carried by two bearings respectively delimited by two parallel walls (4, 5) of the housing, which each serve as an axial support for one of the two springs (22, 23).

3. Device according to Claim 2,
characterised in that the rod (19) is mounted so as to slide within its bearings (20, 21) and is pushed axially in one direction by one of the two springs (22), compressed between the associated wall (4) and a central stop ring (24) integral with the rod and also an end ring (25) suitable for abutting axially against the other wall (5), while the other spring (23) is compressed between this end ring and the radial extension (18) that it pushes towards the central ring.

4. Device according to Claim 3,
characterised in that the rings (24, 25) are arranged on the rod (19) so that in the median position of the shaft (1) the extension (18) of the key is adjacent to the central ring (24) while the end ring (25) abuts against the wall (5) associated with it.

5. Device according to any one of Claims 2 to 4,
characterised in that the axial dimension of the key (14) and the spacing of the walls (4, 5) are such that in axial positions of the shaft (1) corresponding to the selection of extreme gears, the key is adjacent to one or other of the two walls.

6. Device according to any one of the preceding claims,
characterised in that a cup (26) capable of sliding on the rod (19) is interposed axially between each end of the springs (22, 23) and the adjacent part (24, 25, 4, 18).
